# FASCICULE DE BREVET EUROPEEN

(11) **EP 0 925 183 B1**
(45) Date de publication et mention de la délivrance du brevet: **28.06.2006**
(21) Numéro de dépôt: 98938728.7
(22) Date de dépôt: 10.07.1998
(51) Int. Cl.: B32B 27/08, B29C 45/12, B29C 41/20

(54) **Procédé pour la fabrication d'un vitrage plastique, notamment pour l'automobile**
Verfahren zur Herstellung eines Kuststoffensters, insbesondere eines Kunststoffensters für Kraftfahrzeuge
Method for making a plastic glazing, in particular a glazing for motor car use

(30) Priorité: 15.07.1997 FR 9708934
(43) Date de publication de la demande: 30.06.1999
(73) Titulaire: SAINT-GOBAIN GLASS FRANCE, 92400 Courbevoie (FR)
(72) Inventeur: BRAVET, Jean-Louis, F-60150 Thourotte (FR); MAURER, Marc, B-4800 Verviers (BE)
(74) Mandataire: Muller, René
(86) Numéro de dépôt international: PCT/FR1998/001513
(87) Numéro de publication internationale: WO 1999/003678

(56) Documents cités:
- EP-A- 0 353 677
- GB-A- 2 092 511
- NL-A- 8 501 897
- US-A- 4 112 171
- US-A- 4 634 637
- US-A- 4 946 531
- DATABASE WPI Section Ch, Week 9251 Derwent Publications Ltd., London, GB; Class A26, AN 92-419600 XP002060340 & JP 04 314771 A (SHINETSU CHEM IND CO LTD), 5 novembre 1992
- JOURNAL OFFICIEL, 14 JUILLET 2002
- AUTOMOTIVE GLASS NEWS, 2002

## Description

La présente invention concerne la fabrication des produits au moins en partie transparents en matière plastique, notamment les produits de haute qualité optique, équivalente à celle d'un vitrage verre. Pour la constitution des vitrages, par exemple pour le bâtiment ou les véhicules de transport, on peut envisager de remplacer les feuilles de verre par des feuilles en matière plastique.

Par rapport au verre, les matières plastiques sont plus légères, ce qui constitue un avantage déterminant pour les véhicules urbains à moteur électrique, dans la mesure où une augmentation de leur autonomie est cruciale. Dans de tels véhicules, on pourrait même envisager de réaliser en matière plastique d'un seul bloc des portières entières, voire des côtés complets de la carrosserie, y compris les fenêtres, et d'en peindre éventuellement une partie inférieure. D'une manière générale, la légèreté des surfaces transparentes est intéressante relativement aux véhicules de transport modernes, dans la mesure où le progrès technique va de pair avec l'intégration au vitrage de fonctions toujours plus nombreuses (chauffage de lunette arrière, antenne radio, dégivrage du pare-brise, coloration pour empêcher le réchauffement de l'habitacle en cas de fort ensoleillement, incorporation de composés électrochromes, affichage d'informations sur le pare-brise...), et avec des surfaces vitrées sans cesse accrues. Il en résulte un alourdissement général du véhicule nuisible sur le plan de la consommation énergétique.

D'autre part, les matières plastiques sont susceptibles de procurer, par rapport au verre, des conditions de sécurité améliorées, et une protection contre le vol supérieure, du fait de leur résilience supérieure.

Un atout non moins important des matières plastiques par rapport au verre réside dans leur aptitude supérieure à être aisément transformées en formes complexes.

Enfin, l'aptitude des feuilles de matière plastique à être plus ou moins déformées de manière réversible, permet d'en envisager des modes d'installation dans les baies de carrosserie considérablement simplifiés, avec encliquetage, par l'intérieur comme par l'extérieur du véhicule.

Selon une première approche, on forme par extrusion des bandes planes de matière plastique, on découpe une pièce aux dimensions requises, on la fixe sur un dispositif de thermoformage, on procède au thermoformage par contact avec au moins une surface solide de moule et, éventuellement à l'aide d'air comprimé ou avec aspiration. Les propriétés optiques d'une feuille ainsi extrudée ne sont pas satisfaisantes.

D'autre part, la rayabilité des matières plastiques, mentionnée précédemment, est telle que, dans leurs applications optiques ou en éléments transparents, il est nécessaire de revêtir les pièces mises en forme d'un vernis dur. Cette opération s'accompagne, de manière bien connue des spécialistes, de problèmes d'écaillage du vernis, plus sensibles dans le cas des surfaces de formes complexes. De plus, il a uniquement été envisagé de former le vernis dur à température inférieure à la température de déformation ou ramollissement de la matière plastique, dont la forme est ainsi intégralement préservée pendant-cette opération. De telles conditions de formation du vernis sont excessivement contraignantes et ont suscité d'importants efforts pour élaborer des vernis se formant à des températures suffisamment basses et, parallèlement, des thermoplastiques à températures de ramollissement élevées.

Il subsistait donc le besoin d'un produit en matière plastique, transparent ou destiné à des applications optiques, dans lequel seraient évités la médiocre qualité optique inhérente à la technique de l'extrusion ainsi que le problème d'écaillage du vernis, et. dans lequel de nombreux vernis pourraient être mis en oeuvre en association avec de nombreuses matières plastiques dans des conditions de compatibilité satisfaisantes.

Ce produit serait susceptible d'être obtenu par un procédé économique, fiable et simple.

Ces objectifs sont à présent réalisés par l'invention qui a pour objet un procédé tel que défini dans la présente revendication 1.

Le produit comprend une âme en matière plastique solidaire d'une peau comprenant au moins un film en matière plastique qui supporte une couche anti-rayures.

En effet, la circonstance que la couche anti-rayures est supportée sur un film en matière plastique est garante de l'obtention aisée et fiable d'un produit final de haute qualité optique durable, comme cela apparaîtra dans la suite de la description. Elle permet de fabriquer un tel produit final à partir de la couche anti-rayures sur son film support dans un état physique et chimique qui ne sera que peu ou pas modifié par la suite, en les associant à l'âme notamment par injection de la matière plastique la constituant. La mise en oeuvre de certains vernis anti-rayures se formant à températures relativement élevées nécessite, éventuellement, le ,choix d'un matériau du film support sophistiqué mais pour une faible quantité.

Par « qualité optique élevée ou équivalente à celle d'un vitrage », au sens de l'invention, on entend « qualité optique équivalente à celle d'un vitrage verre, apte à être homologué en tant que vitrage automobile selon les différentes normes en vigueur, notamment la norme R 43 en usage en France ».

Quel que soit le matériau de l'âme, les températures d'injection ne sont pas de nature à affecter les autres constituants du produit. Ce matériau peut être choisi parmi de nombreuses matières plastiques ; il peut s'agir d'un thermoplastique classique à température de ramollissement relativement basse, bon marché. Selon l'invention, la matière plastique de l'âme est apte à coopérer avec la peau en vue de l'obtention d'une qualité optique élevée, tout en assumant les propriétés mécaniques recherchées, en particulier de résistance à la flexion et aux impacts.

De préférence, la peau a une épaisseur au plus égale à 500 µm de manière particulièrement préférée comprise entre 10 et 100 µm et comporte un ou plusieurs films plastiques thermoformables transparents, par exemple en polycarbonate (PC), polypropylène (PP), poly (méthacrylate de méthyle) (PMMA), copolymère éthylène/acétate de vinyle (EVA), poly (téréphtalate d'éthylène) (PET), polyuréthane (PU), polyvinylbutyral (PVB) ou copolymère cyclooléfinique (COC), c'est-à-dire notamment copolymère d'éthylène et de norbornène, ou copolymère d'éthylène et de cyclopentadiène. A certains de ces films plastiques thermoformables, peuvent être assignées une ou plusieurs fonctions par incorporation d'agents appropriés. Selon son épaisseur et sa nature, la peau est susceptible de contribuer plus ou moins aux propriétés mécaniques du produit.

D'autre part, une couche fonctionnelle peut être déposée sur un film plastique thermoformable de la peau, ce qui est en particulier le cas de la couche anti-rayures. Enfin, une couche fonctionnelle peut être intercalée, de manière autonome, entre deux films plastiques thermoformables.

Avantageusement, la couche anti-rayures a une épaisseur comprise entre 1 et 10 µm ; elle forme généralement la surface extérieure du produit de l'invention. Elle peut être essentiellement minérale et consister notamment en polysiloxanes et/ou en dérivés de silice et/ou d'alumine, ou mixte, telle que constituée de réseaux de chaînes moléculaires minérales et organiques entremêlées et reliées les unes aux autres au moyen de liaisons silicium-carbone. Une telle couche mixte présente d'excellentes propriétés de transparence, d'adhérence et de résistance aux rayures. Il semble que le réseau minéral confère au revêtement sa durée et sa résistance aux rayures, le réseau organique son élasticité et sa résilience. De tels vernis sont bien connus et ont été décrits dans les demandes publiées EP-A1-0 524 417 et EP-A1-0 718 348 dont l'enseignement est ici incorporé à titre de référence ; certains sont notamment désignés par la marque enregistrée « Ormocer » qui est l'abréviation de « Organically Modified Ceramic ». Il est remarquable que la température de cuisson des Ormocers soit aisément adaptable par variation des proportions relatives entre fraction polymère organique et fraction minérale. En ce qui concerne la matière plastique du film support, il peut être utile, voire nécessaire, d'adapter sa composition pour la rendre compatible avec le mode et la température de dépôt de la couche anti-rayures.

D'autres fonctionnalités peuvent être intégrées dans la peau.

Selon un mode de réalisation particulier, la couche extérieure de la peau, en contact avec l'environnement, contient un agent hydrophobe/oléophobe qui confère donc cette propriété à la surface extérieure du produit. En tant qu'agent hydrophobe/oléophobe, on connaît bien les polysilanes fluorés, notamment obtenus à partir de précurseurs comportant à une extrémité une fonction hydrolysable de type alkoxy, ou halogéno servant à l'accrochage chimique au substrat et une chaîne carbonée perfluorée à l'autre extrémité, destinée à constituer la surface extérieure du produit.

L'agent hydrophobe/oléophobe est, par ordre de préférence décroissant, incorporé dans la couche anti-rayures, qui a une structure chimique proche de la sienne, ou avec laquelle il est tout au moins chimiquement compatible, ou greffé sous forme d'une couche mince d'épaisseur comprise entre 2 et 50 nm, de préférence sur la couche anti-rayures ou bien encore auto-supporté sur un film plastique tel qu'une poly (fluorure de vinyle) (PVF) ou poly (fluorure de vinylidène) (PVDF), à appliquer de manière avantageuse directement sur la couche anti-rayures.

Selon une variante, au moins une couche de décor et/ou de masquage, couvrant tout ou partie de la surface du produit, est positionnée dans la peau, de préférence directement sous le film support de la couche anti-rayures.

Cette couche peut, par exemple, remplacer le décor sérigraphié déposé fréquemment à la périphérie de la face intérieure de vitrages, notamment pour véhicules automobiles, dans le but de masquer, pour un observateur situé à l'extérieur du véhicule, les éléments de carrosserie formant le cadre de la baie et le cordon de colle qui est ainsi protégé de la dégradation par rayonnement ultraviolet. Elle pet comporter des éléments de décor coloré opaque ou transparent, permettant de réaliser des éléments de couleur assortis à la carrosserie ou à l'équipement intérieur, des logos, etc.

La peau peut être munie d'une couche d'adhésion, en particulier sur sa face intérieure pour assurer la fixation avec l'âme, mais aussi entre deux films ou couches de la peau. Des adhésifs courants sont le polyvinylbutyral ou le polyuréthane.

Parmi les constituants principaux de la peau figurent, en dernier lieu, les couches optiquement sélectives qui sont empilées, par exemple sous la couche de décor et/ou de masquage. Ces couches se distinguent par une transmission élevée dans le domaine visible (longueurs d'onde de 400 à 800 nm) et une absorption et/ou une réflexion élevée dans le domaine ultraviolet (< 400 nm) et infrarouge (> 800 nm). Ces couches peuvent consister en couches métalliques minces, par exemple à base d'argent, d'épaisseurs comprises entre 2 et 35 nm, séparées entre elles ainsi que des autres couches ou films adjacents par des couches diélectriques d'oxydes ou de nitrures d'indium, étain, silicium, zinc, titane, tungstène, tantale, niobium, aluminium, zirconium..., d'épaisseurs généralement comprises entre 10 et 150 nm. Ces couches peuvent comporter au moins une couche colorée dans la masse.

L'ensemble de ces couches peut être conducteur d'électricité ; il peut appartenir à la famille des empilements anti-solaires, utilisés pour limiter l'apport de chaleur par rayonnement solaire dans des espaces fermés ou à celle des empilements bas-émissifs, utilisés au contraire pour limiter la déperdition de chaleur dans des espaces fermés, due principalement à une transmission de rayonnement infrarouge à travers le vitrage. De tels empilements sont décrits dans les brevets FR 2 708 926 et EP 0 678 484.

L'âme du produit de l'invention est constituée d'un matériau thermoplastique tel que polycarbonate, poly (méthacrylate de méthyle), copolymère éthylène/acétate de vinyle, poly (téréphtalate d'éthylène), polyuréthane, copolymère- cyctooléfimque (par exemple éthylène/norbornène ou éthylène/cyclopentadiène), ou d'une résine ionomère (copolymère éthylène/acide méthacrylique ou copolymère éthylène/acide acrylique neutralisé par une polyamine...), ou d'un matériau thermodurcissable ou thermoréticulable (polyuréthane, polyester insaturé, copolymère éthylène/acétate de vinyle), ou encore d'une association de plusieurs épaisseurs d'une même ou de plusieurs de ces matières plastiques, à condition que l'âme soit compatible chimiquement avec la peau du produit selon l'invention et confère à l'ensemble les propriétés mécaniques requises.

Dans une première phase du procédé de l'invention, on assemble les constituants de la peau sous la forme d'une nappe ou développée, éventuellement plane.

La couche anti-rayures, lorsqu'elle est en polysiloxanes, est avantageusement formée sur son film support à froid et/ou selon un dépôt assisté par plasma tel que CVD (Chemical Vapor Deposition) plasma. Dans la mesure où des polysiloxanes formés de cette manière ne sont plus réactifs, ayant déjà complètement réagi, il convient de choisir la composition de la couche anti-rayures de telle sorte qu'elle soit bombable, pour éviter des problèmes d'écaillage ultérieurs.

Quand la couche anti-rayures est constituée d'Ormocers, ceux-ci sont appliqués sur le film support à plat sous forme de précurseurs liquides, selon des techniques classiques de flow coating, trempé notamment dans un bain de faible volume dans un souci d'économie, pulvérisation de liquide ou rideau. Le précurseur est constitué par exemple de dispersions colloïdales dans des solvants de plusieurs composés hybrides, c'est-à-dire à la fois organiques et minéraux, ou de polymères de faibles poids moléculaires fonctionnalisés par des groupements SiOR en mélange avec du tétraéthoxysilane. Le durcissement de la couche anti-rayures a alors lieu selon un procédé sol-gel, dans lequel le précurseur est d'abord séché, en passant par l'état intermédiaire d'un gel, par rayonnement ou chauffage modérés notamment, dans ce dernier cas, à moins de 50°C. Le film support est alors toujours maintenu sensiblement à plat ; le durcissement de l'Ormocer est achevé au cours de la seconde phase du procédé, décrite ci-dessous, consistant en un thermoformage de ladite peau, par rayonnement ultraviolet et/ou chauffage à des températures de 100 à 300°C et, plus précisément de 140-240°C.

Dans l'un ou l'autre cas, les couches et, en particulier, la couche anti-rayures sur le produit fini, assemblé, bombé, répondent aux caractéristiques requises pour son utilisation et notamment aux caractéristiques optiques réglementaires quand il s'agit de l'employer en tant que vitrage ou en tant qu'élément comportant un vitrage pour véhicule de transport notamment automobile.

Les formes souvent complexes des vitrages automobiles impliquent que la couche anti-rayures en particulier soit bombable sans s'écailler et sans se fissurer. Ainsi, avantageusement, la couche anti-rayures n'est complètement durcie qu'après la mise en forme de son support et, de préférence, elle ne commence à durcir et à réticuler que simultanément à la mise en forme de son support de façon à présenter in fine un aspect de surface sans craquelures ou écaillages.

Les techniques de dépôt et de formation qui viennent d'être décrites peuvent également être employées pour l'incorporation de la fonction hydrophobe/oléophobe, que l'agent correspondant soit partie intégrante de la couche anti-rayures, ou supporté sur un film plastique ; lorsqu'il est greffé en couche mince, il est également formé de préférence à partir d'un dépôt sous forme liquide par pulvérisation s'il est constitué de silanes, ou par évaporation selon des techniques telles que CVD plasma, éventuellement sous vide.

La ou les couches de décor et de masquage sont apportées sur des films supports, notamment en matière plastique, selon des techniques utilisées en impression : sérigraphie, flexographie, jet d'encre, impression laser, etc.

La couche d'adhésion est commodément apportée sous forme d'un film intègre thermoplastique.

La formation d'empilements optiquement sélectifs fait appel à des dépôts successifs par pulvérisation cathodique, notamment assistée par champ magnétique, ou similaire. A cet égard, il est à nouveau fait référence aux brevets FR 2 708 926 et EP 0 678 484.

La première phase du procédé de l'invention de formation de la peau sensiblement à plat peut être conclue par une opération visant à en rendre les constituants plus ou moins solidaires les uns des autres, notamment par calandrage à froid ou à température peu supérieure à la température ambiante.

Comme brièvement évoqué ci-dessus, la seconde phase du procédé consiste à thermoformer la peau à une température préférée de 100-300°C, selon une forme éventuellement non développable, identique à celle du produit final.

Pour ce faire, il est avantageux, en particulier pour achever la polymérisation et/ou réticulation de la couche anti-rayures, de la laisser en contact avec l'atmosphère ambiante, c'est-à-dire sans contact avec des éléments solides ; seule l'autre face de la peau est alors en contact avec un support dont elle est destinée à prendre la forme. Des moyens auxiliaires, par exemple de soufflage ou aspiration, peuvent être mis en oeuvre pour conformer au moins une partie de la peau à ce support. Outre l'achèvement de la réticulation de certains constituants, le traitement thermique effectué dans cette seconde phase a pour effet de relaxer les contraintes dans la peau.

La troisième phase du procédé de l'invention consiste à assembler la peau à une âme en matière plastique par pressage à chaud dans une forme ou par injection thermoplastique ou injection réactive (RIM) du matériau de l'âme, la peau ayant été positionnée en fond de moule, au début de cette troisième phase, de telle sorte que sa couche anti-rayures et/ou sa couche hydrophobe/oléophobe complètement polymérisée et/ou réticulée, c'est-à-dire pratiquement plus réactive, soit en contact direct avec la paroi de moule.

L'invention est maintenant illustrée par l'exemple suivant.

### EXEMPLE

Sur un film de 80 µm d'épaisseur de polycarbonate standard préparé à partir de Bisphénol A, commercialisé par la Société BAYER AG sous la marque enregistrée « Makrolon » et dont la température de transition vitreuse T_{g} est égale à 145°C, on dépose par flow coating le revêtement anti-rayures décrit dans l'exemple de la demande de brevet EP-A1-0 718 348 en un film liquide de 20 µm d'épaisseur. Après séchage, cette épaisseur est réduite à 5 µm.

Le film support revêtu est alors placé au fond d'un moule, la couche anti-rayures étant positionnée au-dessus ; l'ensemble est soumis à un traitement thermique de 155°C pendant 30 min. Une peau au sens de la présente invention est alors constituée sous sa forme quasiment définitive.

Celle-ci est placée au fond d'un moule d'injection, de sorte que la couche anti-rayures soit en contact avec la paroi de moule. On procède alors, de la manière décrite ci-dessus, à l'injection thermoplastique d'une couche de 5 mm d'épaisseur, d'une part, et 10 mm d'épaisseur, d'autre part, sur deux échantillons différents, du même polycarbonate standard que celui constituant le film support de la couche anti-rayures.

Le stratifié obtenu présente une transparence, une qualité optique amplement suffisantes pour une application en tant que vitrage.

Le procédé de l'invention présente les avantages inhérents à la technique d'injection. Il est ainsi possible de conformer la pièce injectée avec un bourrelet périphérique pour en augmenter la rigidité, ou avec un relief et/ou des prolongements tels que nervures, profilés, pattes ou oreilles, et/ou de disposer au sein de la matière plastique un ou plusieurs inserts, notamment métalliques. Cette disposition est particulièrement utile pour la préhension ou la fixation du produit de l'invention, ainsi que pour le montage définitif auquel il est destiné, comme dans une baie de carrosserie de véhicule automobile. Dans ce dernier cas, la formation de profilés périphériques adaptés permet d'envisager un montage du produit par l'intérieur du véhicule, c'est-à-dire par l'habitacle. Le cordon de colle est alors disposé sous le bord de la baie de carrosserie et n'est pas exposé aux rayons solaires. La protection du cordon de colle par un vernis formé à la périphérie de la face intérieure de la feuille devient naturellement superflue.

Les appendices formés à la périphérie du produit au cours de son injection peuvent être conservés, ou sciés en totalité ou en partie selon leur usage. Un ponçage peut être prévu après un tel sciage.

Un profilé périphérique de géométrie symétrique par rapport au plan du produit peut être opportun, par exemple dans le cas de surfaces transparentes latérales de véhicules de transport, l'une ou l'autre partie du profilé pouvant être sciée ultérieurement, selon qu'il s'agit de l'élément transparent droit ou gauche.

Par ailleurs, d'éventuels inserts peuvent être liés à l'incorporation dans le produit de fonctions particulières, telles qu'un feu stop dans une lunette arrière.

Enfin, le procédé de l'invention est économique, aisé et fiable et permet l'utilisation de nombreuses combinaisons de constituants, sans que le problème de leur compatibilité, notamment sur le plan de leurs températures de mise en oeuvre, ne se pose.

## Revendications

1. Procédé de fabrication d'un produit comprenant une âme en matière plastique recouverte d'une peau comprenant au moins un film en matière plastique supportant une couche anti-rayures, procédé qui comprend les étapes :
• de dépôt d'éléments constitutifs d'une couche anti-rayures sur un film en plastique sensiblement plat,
• de conformation de ce film portant les éléments de couche anti-rayures selon une forme égale ou au moins proche de la forme définitive du produit final, au moins dans certaines parties, tout en réticulant au moins en partie cette couche anti-raynres, la polymérisation et/ou réticulation de la couche anti-rayures étant achevée sans contact de celle-ci avec des éléments solides.

2. Procédé selon la revendication 1, **caractérisé en ce que** la réticulation et la conformation simultanée font appel à un traitement thermique à température comprise entre 100 et 300 °C et, plus précisément, entre 140 et 204 °C.

3. Procédé selon l'une des revendications 1 ou 2, **caractérisé en ce que** la conformation est obtenue en supportant le film revêtu de la couche anti-rayures ou les éléments destinés à la constituer, au moins sur une partie de sa surface par un moule.

4. Procédé selon la revendication 3, **caractérisé en ce que** le moule portant le film est un cadre ouvert en son centre.

5. Procédé selon l'une des revendications 1 à 4 consistant :
• dans une première partie, à assembler les éléments constitutifs d'une peau par pose sensiblement à plat, ou par apport à partir d'un organe de forme développable, et à soumettre le cas échéant les éléments constitutifs de la peau à une opération visant à les rendre plus ou moins solidaires les uns des autres puis,
• dans une seconde partie à soumettre la peau à un traitement thermique, la peau étant supportée en totalité ou en partie par une surface de moule, un moyen auxiliaire pour conformer au moins une partie de la peau à ladite surface de moule, notamment par soufflage ou aspiration, étant éventuellement prévu, de manière à relaxer les contraintes dans la peau, et à en réticuler certains éléments constitutifs et
• dans une troisième partie à assembler la peau à une âme en matière plastique par pressage à chaud dans une forme, ou par injection thermoplastique ou injection réactive du matériau de l'âme, la peau ayant été positionnée en fond de moule, de telle sorte que sa couche anti-rayures et/ou sa couche hydrophobeloléophobe constitutive soit en contact direct avec le moule.

6. Procédé selon l'une des revendications 1 à 5, **caractérisé en ce que** le film revêtu de la couche anti-rayures ou des éléments la constituant est associé avant conformation à un ou plusieurs autres films exerçant eux-mêmes des fonctions ou portant des moyens tels couches, décors sérigraphiés, réalisant ces fonctions autres que l'anti-rayures.

## Claims

1. Process for manufacturing a product comprising a plastic core coated with a skin comprising at least one plastic film supporting a scratch-resistant layer which process, comprises the steps:
• of depositing the constituent elements of a scratch-resistant layer on a substantially flat plastic film and
• of shaping this film bearing the elements of the scratch-resistant layer into a shape which is the same as or at least similar to the ultimate shape of the end-product, at least in certain parts, while at the same time at least partly crosslinking this scratch-resistant layer, the polymerization and/or crosslinking of the scratch-resistant layer being achieved without the latter coming into contact with solid elements.

2. Process according to Claim 1, **characterized in that** the crosslinking and simultaneous shaping involve a heat treatment at a temperature of between 100 and 300°C, and more precisely between 140 and 240°C.

3. Process according to either of Claims 1 and 2, **characterized in that** the shaping is carried out by supporting the film coated with the scratch-resistant layer, or the elements intended to constitute this layer, at least on part of its surface, by a mould.

4. Process according to Claim 3, **characterized in that** the mould carrying the film is a frame open at its centre..

5. Process according to one of Claims 1 to 4, which consists:
• firstly, in assembling the constituent elements of a skin by laying them approximately flat, or by supplying them from a device of developable shape, and, where appropriate, in subjecting the constituent elements of the skin to an operation whose purpose is to consolidate them to a greater or lesser extent, then,
• secondly, in subjecting the skin to a heat treatment, the skin being supported completely or partly by a mould surface, an auxiliary means for shaping at least part of the skin to the said mould surface, especially by blowing or by suction, being optionally provided so as to relax the stresses in the skin, and in crosslinking certain constituent elements thereof and
• thirdly, in joining the skin to a plastic core by hot pressing in a form, or by thermoplastic injection moulding or reactive injection moulding of the material of the core, the skin having been positioned in the bottom of the mould in such a way that its constituent scratch-resistant layer and/or hydrophobic/oleophobic layer is in direct contact with the mould

6. Process according to one of Claims 1 to 5, **characterized in that** the film coated with the scratch-resistant layer or elements constituting this layer is combined, before shaping, with one or more other films which themselves fulfil functions or carry means, such as screen-printed decorations or layers, carrying out these functions other than the scratch-resistance function.

## Patentansprüche

1. Verfahren zur Herstellung eines Erzeugnisses, das einen Kunststoffkern umfasst, der mit einer Umhüllung überzogen ist, die mindestens eine eine kratzfeste Schicht tragende Kunststofffolie umfasst, das die Stufen:
- Aufbringen von eine kratzfeste Schicht bildenden Bestandteilen auf einer im Wesentlichen flachen Kunststofffolie und
- Bringen dieser die Bestandteile der kratzfesten Schicht tragenden Folie in eine Form, die wenigstens in bestimmten Teilen gleich oder wenigstens angenähert der endgültigen Form des Endproduktes ist, wobei die kratzfeste Schicht wenigstens teilweise vernetzt wird und die Polymerisation und/oder Vernetzung der kratzfesten Schicht ohne deren Kontakt mit den festen Elementen vollendet wird,
umfasst.

2. Verfahren nach Anspruch 1, **dadurch gekennzeichnet, dass** für die Vernetzung und die gleichzeitige Formgebung eine Wärmebehandlung bei einer Temperatur von 100 bis 300 °C und insbesondere zwischen 140 und 204 °C angewendet wird.

3. Verfahren nach Anspruch 1 oder 2, **dadurch gekennzeichnet, dass** die Formgebung erhalten wird, indem die Folie, die mit der kratzfesten Schichte oder mit den Bestandteilen, die vorgesehen sind, diese zu bilden, überzogen ist, in wenigstens einem Teil ihrer Oberfläche von einer Form getragen wird.

4. Verfahren nach Anspruch 3, **dadurch gekennzeichnet, dass** die die Folie tragende Form ein in der Mitte offener Rahmen ist.

5. Verfahren nach einem der Ansprüche 1 bis 4, das darin besteht, dass:
- in einem ersten Teil die eine Umhüllung bildenden Bestandteile, indem sie im Wesentlichen flach angeordnet werden, oder durch Zuführung von einem Mittel mit entwickelbarer Form verbunden und gegebenenfalls einem Arbeitsgang unterworfen werden, der darauf gerichtet ist, sie miteinander mehr oder weniger fest zu verbinden,
- in einem zweiten Teil die Umhüllung einer Wärmebehandlung unterworfen wird, wobei sie insgesamt oder teilweise von einer Fläche einer Form getragen wird, ein Hilfsmittel, um wenigstens einen Teil der Umhüllung auf dieser Fläche der Form, insbesondere durch Blasen oder Ansaugen, zu formen, gegebenenfalls derart vorgesehen ist, dass die Spannungen in der Umhüllung sich erholen, und bestimmte Bestandteile vernetzt werden und
- in einem dritten Teil die Umhüllung mit einem Kunststoffkern durch Heißpressen in einer Form oder durch thermoplastisches bzw. Reaktionsspritzgießen des Materials des Kerns verbunden wird, wobei die Umhüllung derart auf dem Boden der Form angeordnet ist, dass ihre kratzfeste und/oder hydrophobe/oleophobe Schicht sich in direktem Kontakt mit der Form befindet.

6. Verfahren nach einem der Ansprüche 1 bis 5, **dadurch gekennzeichnet, dass** die Folie, die mit der kratzfesten Schicht oder den diese bildenden Bestandteilen überzogen wird, vor der Formgebung mit einer oder mehreren anderen Folien, die ihrerseits Funktionen ausüben oder Mittel wie Schichten und durch Siebdruck aufgebrachte Verzierungen tragen, wobei diese Funktionen andere als kratzfeste sind, verbunden wird.
